(19)

**Europäisches Patentamt**
**European Patent Office**
**Office européen des brevets**

(11) **EP 4 637 139 A1**

(12) **EUROPEAN PATENT APPLICATION**

(43) Date of publication:
**22.10.2025 Bulletin 2025/43**

(21) Application number: **24315165.1**

(22) Date of filing: **15.04.2024**

(51) International Patent Classification (IPC):
*H04N 19/117* (2014.01)    *G06N 3/045* (2023.01)
*G06N 3/047* (2023.01)    *G06T 9/00* (2006.01)
*H04N 19/85* (2014.01)

(52) Cooperative Patent Classification (CPC):
**H04N 19/117; G06N 3/045; G06N 3/047;**
**G06N 3/084; G06T 9/002; H04N 19/85**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **Le Meur, Olivier**
  **35160 TALENSAC (FR)**
• **Damodaran, Bharath Bhushan**
  **56000 VANNES (FR)**
• **Schnitzler, Francois**
  **56890 SAINT AVE (FR)**
• **Lambert, Anne**
  **35250 SAINT-AUBIN-D'AUBIGNE (FR)**

(74) Representative: **Interdigital**
**Immeuble ZEN 2**
**845 A, avenue des Champs Blancs**
**35510 Cesson-Sévigné (FR)**

(54) **METHOD AND DEVICE FOR IMAGE ENHANCEMENT BASED ON RESIDUAL CODING USING INVERTIBLE DEEP NETWORK**

(57)    A method and device for decoding an encoded data propose to determine a residual error image based on the decoded image only and generated by an invertible neural network without needed any additional signaling data. The residual error image is combined with the decoded image, resulting into an enhanced image. The invertible neural network is trained to determine, in forward pass, a latent variable from a decoded image and a residual coding map and to determine, in backward pass, a reconstructed residual map from a decoded image and a random residual map, so that the latent variable follows a normal distribution or a uniform distribution.

Figure 7

EP 4 637 139 A1

**Description**

TECHNICAL FIELD

At least one of the present embodiments generally relates to a method and a device for decoding images and particularly to enhance a decoded image by combining it with a residual picture generated using an invertible deep network.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

SUMMARY

Embodiments described hereafter are related to method and device for decoding an encoded data propose to determine a residual error image based on the decoded image only and generated by an invertible neural network without needed any additional signaling data. The residual error image is combined with the decoded image, resulting into an enhanced image. The invertible neural network is trained to determine, in forward pass, a latent variable from a decoded image and a residual coding map and to determine, in backward pass, a reconstructed residual map from a decoded image and a residual map following a known distribution, such as a normal distribution or a uniform one.
According to a first aspect of at least one embodiment, a method comprises decoding an image from an obtained encoded video data, generating a random map, performing a backward pass on an invertible neural network configured to generate a residual image based on the decoded image and the random map, combining the decoded image and the residual image into an enhanced image, and providing the enhanced image.
According to a second aspect of at least one embodiment, an apparatus comprises a decoder configured to decode an image from an obtained encoded video data, an invertible neural network configured to generate a residual image based on the decoded image and the random map, one or more processor configured to generate a random map, perform a backward pass on an invertible neural network to generate a residual image based on the decoded image and the random map, combine the decoded image and the residual image into an enhanced image, and provide the enhanced image,
**[0006]** One or more of the present embodiments also provide a computer readable storage medium having stored thereon instructions for performing at least part of any of the methods described above. One or more embodiments also provide a computer program product including instructions for performing at least part of any of the methods described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5 illustrates an example of simple neural network used for implicit neural representation (INR).

Figure 6 illustrates an example of architecture for training the invertible neural network according to embodiments.

Figure 7 illustrates an example of architecture for using a trained invertible neural network to improve the image decoding according to embodiments.

Figure 8A, 8B, 8C illustrate example of architectures for the invertible neural network model according to embodiments.

Figure 8B presents details of this architecture.

Figure 8C presents a variation of the double side affine coupling layers that could be used in replacement of elements and of figure 8B.

Figure 9 illustrates an example of process for decoding an image using a trained invertible neural network generating a residual error map according to embodiments.

DETAILED DESCRIPTION

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

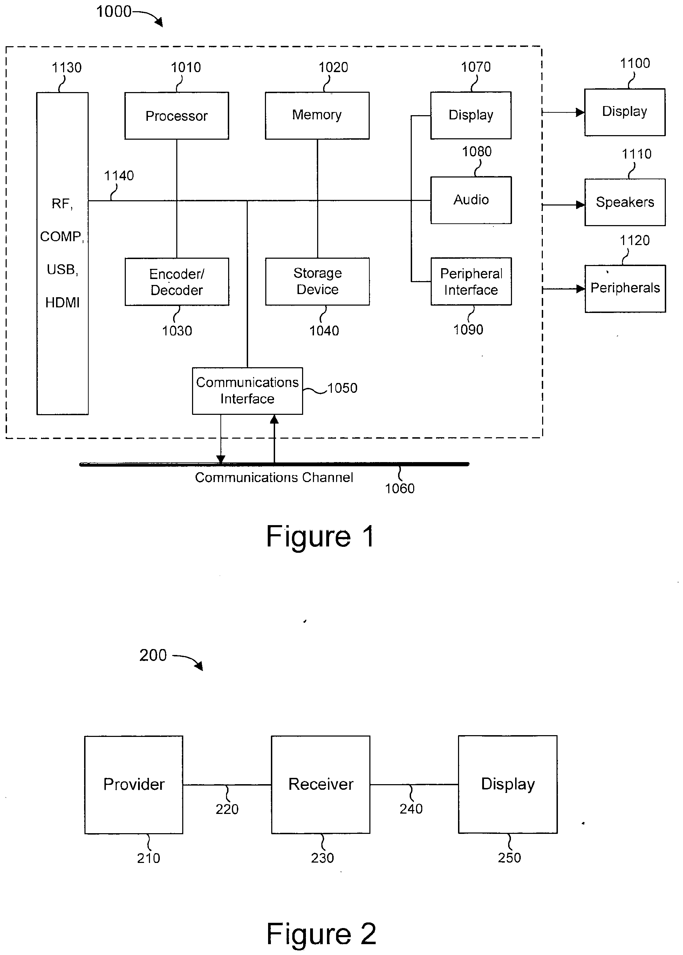

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. The processor 1010 may be any type of electronic circuitry such as a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, an integrated circuit (IC), a state machine, and the like. The processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

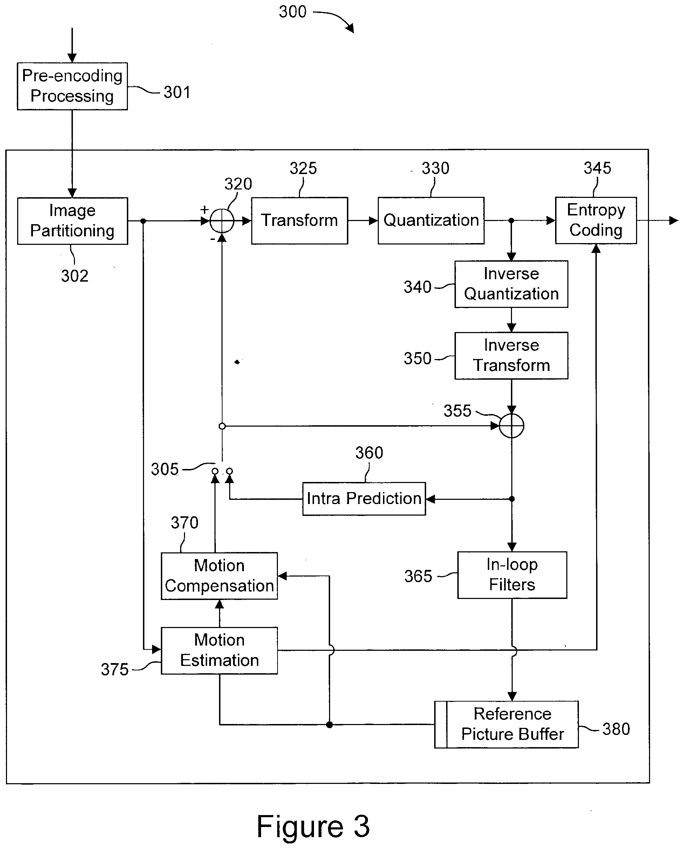

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

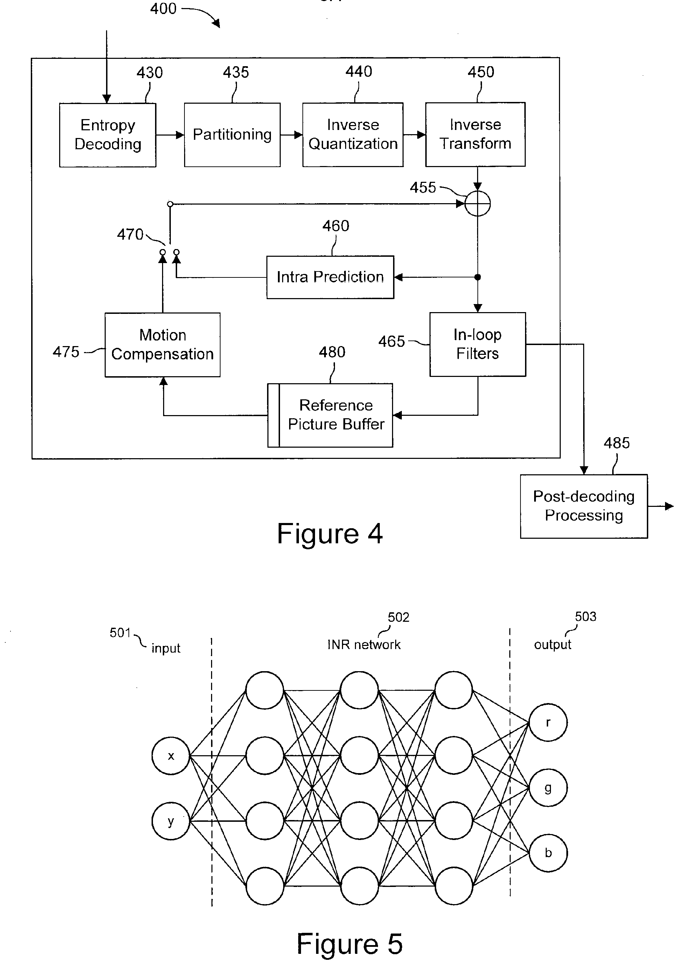

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream.

In embodiments, the post-decoding processing comprises generating residual data (for example a residual picture) based on the decoded picture using a specially trained invertible deep neural network and combining the residual with the decoded picture. This may result in an enhanced picture. Thanks to the use of an invertible deep neural network, no specific data need to be conveyed to generate the residual data.

**Figure 5** illustrates an example of simple neural network used for implicit neural representation (INR). Such a neural network used for INR can be referred to as an INR network 502. INR parameterizes a signal as a function, which takes coordinates 501 as input and outputs values 503 of a signal at these coordinates. INR has recently been applied to image, videos or 3D objects among other applications. In the image case, the inputs 501 can be pixel coordinates X=$(x, y)$ and the INR may output 120 the color values $C_X = (r, g, b)$ or $(y, u, v)$ of the input pixel. The input coordinates may be modified by a transformation before being used as input for the neural network. This transformation can be a Fourier mapping, coordinate transformation, normalization, or other functions.

The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network 502 is typically a neural network, composed of multiple neural layers, such as fully connected layers. In the example of Figure 5, the network has four layers. Intermediate outputs are represented by circles. Each neural layer can be described as a function that first multiplies the input by a tensor, adds a vector called the bias and then applies a nonlinear function on the resulting values. The shape (and other characteristics) of the tensor and the type of non-linear functions are called the architecture of the network. The values of the tensor and the bias are denoted by the term "weights". The weights and, if applicable, the parameters of the non-linear functions, are called the parameters $\beta$ of the network. The architecture and the parameters define a "model". The notation $f_\beta$ represents an INR function parameterized by $\beta$.

An example of process to encode a signal using an INR is done by optimizing the weights $\beta$ (or a subset of them) of the INR network to reconstruct the signal and optionally encoding them to create the output bitstream. For an image $I$ of size $(M \times N)$, the weights $\beta$ can for example be optimized by minimizing the following loss function:

$$Loss = D(I, f_\beta) + \lambda\, R(\beta)$$

where D is a distortion which quantifies the difference between the reconstructed image by $f_\beta$ to the original image $I$, #$I$ is the number of pixels of image $I$, $R$ is the bitrate of the encoded parameters and $\lambda$ a trade-off parameter between $D$ and $R$. $D$

could be any differentiable distortion measure, such as mean squared error as in the following equation:

$$D_{MSE}(I, f_\beta) = \frac{1}{\#I} \sum_{(x,y)}^{N \times M} (I(x,y) - f_\beta(x,y))^2$$

M and N are the width and height of an image. Other metrics such as LPIPS (learned perceptual image patch similarity) can also be used in this case. The optimization of the weights $\beta$ is typically performed by a machine learning approach such as a batch gradient descent method.

To decompress the signal, $f_\beta$ is evaluated at all relevant coordinates. These coordinates can be selected at decoding. A typical choice would be all pixel coordinates for an image or video. As an example, for a 256x256 pixel image, these coordinates could be all pairs $(x, y)$ for all $x \in \{0,1, \dots ,255\}$ and $y \in \{0,1, \dots ,255\}$. Other choices are possible, for example to upsample, downsample or extend the original image. In the following, the decoded image is called $\hat{I}$.

The current drawback of INR encoding is related to their difficulty to represent faithfully the high frequencies of the input content.

Embodiments described herein aim at mitigating this problem by reconstructing a coding residual error at the decoder side. We define the coding residual error map as follows. Here we consider that the residual error is centered on a positive value $\alpha$ :

$$\epsilon(x,y) = \alpha + I(x,y) - \hat{I}(x,y)$$

Embodiments described herein propose to use Invertible Neural Networks (INN) that are based on invertible and differential modules that define a bijective mapping between input and output data.

Embodiments propose an invertible method to transform a residual error coding map into a random map and vice versa. This allows to reconstruct a residual error at the decoder side, based on the decoded image without any side information related to the residual error and thus without increasing the bit rate. At least one embodiment is based on transforming a pixel-wise coding residual error into a pixel-wise map, in which all pixels follow a well know distribution, for example a normal distribution. By using an invertible neural network, the transformation of the residual map $\varepsilon$ into a random one is invertible. Therefore, a decoder uses the INN in backward pass, based on the decoded picture and a randomly generated residual image, to reconstruct a residual picture that, when combined with the decoded picture, allows to correct some errors and enhance the decoded picture.

A system implementing the proposed embodiments may comprise an encoder (e.g. based on a standard video coding system such as VVC, or other coding systems for example INR-based) that encodes an image $I,$ and a decoder to decode the encoded image. Such system may comprise the computation of the pixel-wise residual coding map $\varepsilon$. An invertible network $g_\theta$ takes in input the decoded image $\hat{I}$ and the pixel-wise residual coding map $\varepsilon$ . The trainable parameters of the network are grouped into the variable $\theta$. The forward pass of the network is:

$$\left(\hat{J}_{fwd}, z\right) = g_\theta(\hat{I}, \epsilon)$$

where $\hat{J}_{fwd}$ is the reconstructed decoded image and $z \approx \mathbb{N}(0,1)$ having the same resolution of the input image $(\mathbb{N}(0,1)$ means that the targeted distribution is a normal distribution with a mean equal to 0 and a unit variance. Other distributions such as a uniform distribution may be used. The backward pass of the network output is:

$$\left(\hat{J}_{bwd}, \hat{\epsilon}\right) = g_\theta^{-1}(\hat{I}, z)$$

where $\hat{J}_{bwd}$ is the reconstructed decoded image after the backward pass and $\hat{\varepsilon}$ is the reconstructed coding residual map. The final image $I_f$ at the decoder side is finally obtained by adding back the estimated residual to the decoded image:

$$I_f(x,y) = \hat{I}(x,y) + \hat{\epsilon}(x,y)$$

For an input image $I$ of size $N \times M$ that has been compressed (i.e. encoded and subsequently decoded resulting into $\hat{I}$), the coding error map $\varepsilon$ is given by:

$$\epsilon(x,y) = \alpha + I(x,y) - \hat{I}(x,y)$$

where, $\alpha$ is a positive offset. It is proposed to use $\alpha = 0.5$ in order to center the residual error on 0.5. This pixel-wise coding error map $\varepsilon$ is also named residual image or residual coding map.

The input image may be defined in $\mathcal{R}^n$ where n is the number of channels. If the image is defined in $\mathcal{R}^n$, the residual map is also defined in the same space, for example with $n = 1$, for grayscale image such as Y in the YUV color space or with $n = 3$, for color images, such as RGB, Lab, etc.

In the described method, the reconstructed forward and reconstructed backward compressed image, named $\hat{J}_{fwd}$ and $\hat{J}_{bwd}$, respectively are generated by the INN. However, although useful during the training phase, these images are replaced by the actual compressed image $\hat{I}$ since this image is produced by the encoder and received by the decoder.

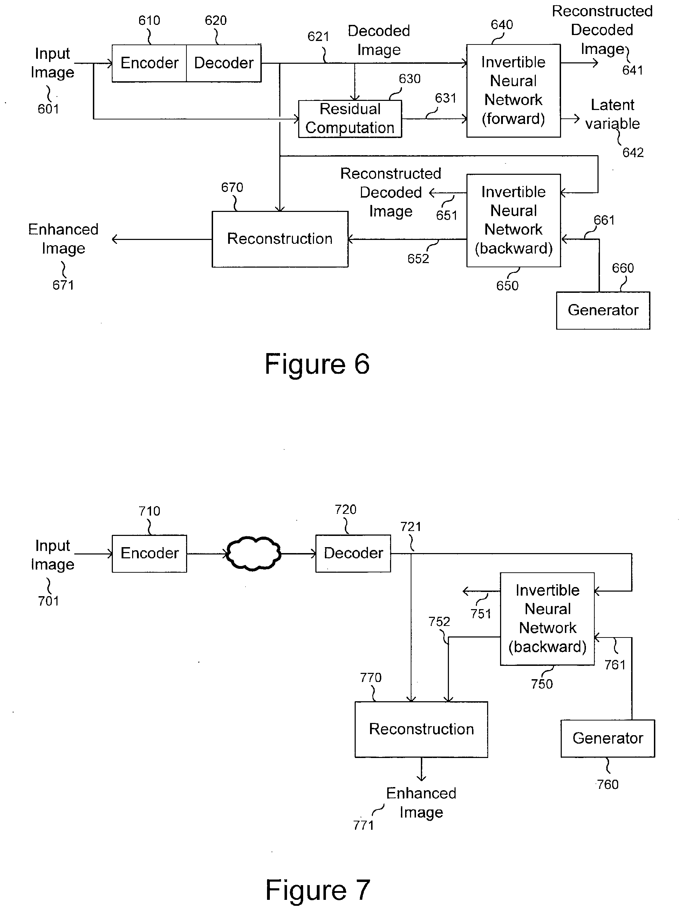

**Figure 6** illustrates an example of architecture for training the invertible neural network according to embodiments. The proposed solution is independent from the type of the codec for the image encoding. The following architecture is proposed for input image defined in $\mathcal{R}^3$.

The input image $I$ (601) is first encoded by an encoder (610) and decoded by the corresponding decoder (620) to generate a decoded image $\hat{I}$ (621). A residual coding map $\varepsilon$ (631) is determined by subtracting (630), pixel by pixel, the decoded image from the input image. The architecture uses an invertible neural network that is operated in a forward pass (640 and a backward pass (650).

For the forward pass (640), the invertible network takes in input the decoded image $\hat{I}$ and its pixel-wise residual coding map $\varepsilon$. The output of the network for the forward pass is a reconstructed (i.e., estimated) decoded image $\hat{J}_{fwd}$ (641) as well as a latent variable (642). The latent variable corresponds to a residual map and is constrained to follow a normal distribution $\varepsilon_{fwd}$.

A generator (660) generates a random or uniform residual map z (661) in which pixel values follow a normal or uniform distribution. The input of the network for the backward pass is composed of the decoded image $\hat{I}$ (621) and the residual map z (661). The output of the backward pass is the reconstructed decoded image $\hat{J}_{bwd}$ (651) and the reconstructed residual $\hat{\varepsilon}$ (652). The final enhanced image (671) is reconstructed (670) through the following operation:

$$I_f(x,y) = \hat{I}(x,y) + \hat{\epsilon}(x,y) - \alpha$$

The forward pass is based on a loss $\mathcal{L}_{fwd}$ with multiple goals: forcing to reconstruct the decoded image and forcing the output residual (latent variable) to follow chosen distribution (normal or a uniform distribution). The following partial losses are determined to fulfill these objectives.

Two first losses are related to the first objective and are given by:

$$\mathcal{L}_2(\hat{I}, \hat{J}_{fwd}) = \frac{1}{N \times M} \sum_{(x,y)}^{N \times M} \left\| \hat{I}(x,y) - \hat{J}_{fwd}(x,y) \right\|^2$$

$$\mathcal{L}_{SSIM}(\hat{I}, \hat{J}_{fwd}) = 1 - SSIM(\hat{I}, \hat{J}_{fwd})$$

The loss related to the normal distribution is given by:

$$\mathcal{L}_z(\epsilon_{fwd}) = \frac{1}{N \times M} \sum_{(x,y)}^{N \times M} \epsilon_{fwd}^2$$

The loss related to the uniform distribution, with C representing a constant value, is given by:

$$\mathcal{L}_z\left(\epsilon_{fwd}\right) = \frac{1}{N \times M} \sum_{(x,y)}^{N \times M} \left\| C - \epsilon_{fwd}(x,y) \right\|^1$$

The final forward loss is equal to:

$$\mathcal{L}_{fwd}\left(\hat{I},\hat{J}_{fwd},\epsilon_{fwd}\right) = \alpha_{fwd1} \times \mathcal{L}_2\left(\hat{I},\hat{J}_{fwd}\right) + \alpha_{fwd2} \times \mathcal{L}_{SSIM}\left(\hat{I},\hat{J}_{fwd}\right) + \alpha_{fwd3} \times \mathcal{L}_z\left(\epsilon_{fwd}\right)$$

Where the parameters $\alpha_{fwd1}$, $\alpha_{fwd2}$, $\alpha_{fwd3}$ are used to balance the different losses. By default, they are set to 1.

The backward pass is based on a backward loss $\mathcal{L}_{bwd}$ with the following goals: forcing to reconstruct the decoded image, forcing to reconstruct the residual map, and forcing to reconstruct the original image.

Two first losses are related to the first objective of the backward pass and are given by:

$$\mathcal{L}_2^c\left(\hat{I},\hat{J}_{bwd}\right) = \frac{1}{N \times M} \sum_{(x,y)}^{N \times M} \left\| \hat{I}(x,y) - \hat{J}_{bwd}(x,y) \right\|^2$$

$$\mathcal{L}_{SSIM}^c\left(\hat{I},\hat{J}_{bwd}\right) = 1 - SSIM\left(\hat{I},\hat{J}_{bwd}\right)$$

Two losses are related to the reconstruction of the residual map and are given by:

$$\mathcal{L}_2^r(\epsilon,\hat{\epsilon}) = \frac{1}{N \times M} \sum_{(x,y)}^{N \times M} \left\| \epsilon(x,y) - \hat{\epsilon}(x,y) \right\|^2$$

$$\mathcal{L}_{SSIM}^r(\epsilon,\hat{\epsilon}) = 1 - SSIM(\epsilon,\hat{\epsilon})$$

Two losses are related to the reconstruction of the original image:

$$\mathcal{L}_2^f\left(I,I_f\right) = \frac{1}{N \times M} \sum_{(x,y)}^{N \times M} \left\| I(x,y) - I_f(x,y) \right\|^2$$

$$\mathcal{L}_{SSIM}^f\left(I,I_f\right) = 1 - SSIM\left(I,I_f\right)$$

The final backward loss is equal to:

$$\mathcal{L}_{bwd}\left(I,I_f,\epsilon,\hat{\epsilon},\hat{J}_{bwd},\hat{I}\right) = \alpha_{bwd1} \times \mathcal{L}_2^c\left(\hat{I},\hat{J}_{bwd}\right) + \alpha_{bwd2} \times \mathcal{L}_{SSIM}^c\left(\hat{I},\hat{J}_{bwd}\right) +$$

$$\alpha_{bwd3} \times \mathcal{L}_2^r(\epsilon,\hat{\epsilon}) + \alpha_{bwd4} \times \mathcal{L}_{SSIM}^r(\epsilon,\hat{\epsilon}) +$$

$$\alpha_{bwd5} \times \mathcal{L}_2^f\left(I,I_f\right) + \alpha_{bwd6} \times \mathcal{L}_{SSIM}^f\left(I,I_f\right)$$

Where the parameters $\alpha_{bwd1}$, $\alpha_{bwd2}$, $\alpha_{bwd3}$, $\alpha_{bwd5}$, $\alpha_{bwd4}$, $\alpha_{bwd6}$ are used to balance the different losses. By default, they are set to 1.
The final loss is given by:

$$\mathcal{L} \;=\; \alpha_{fwd} \times \mathcal{L}_{fwd}\big(\hat{I}, \hat{J}_{fwd}, \epsilon_{fwd}\big) + \alpha_{bwd} \times \mathcal{L}_{bwd}\big(I, I_f, \epsilon, \hat{\epsilon}, \hat{J}_{bwd}, \hat{I}\big)$$

where the parameters $\alpha_{fwd}$, $\alpha_{bwd}$ are used to balance the forward and backward losses. By default, they are set to 1 and 5 respectively. Other type of loss functions may be leveraged, such as gradient-based loss functions for instance.

The training procedure consists in minimizing the losses, in other words, determining the parameters $\theta$ such that:

$$\hat{\theta} = argmin_{\theta}\,\mathcal{L}$$

The training procedure is done on patches (patch size, by default 128 × 128) randomly extracted for the training image, the batch size is 4, the learning rate is $1 \times 10^{-4}$. Data augmentation is performed randomly by using horizontal flip, vertical flip and rotation of 90° of the patches. The training is optimized using the ADAM optimizer.

When the proposed embodiments are implemented in a video coding system, this training may be done at the encoder side, for example based on the encoder 300 of figure 3 and the decoder 400 of figure 4. The result is a trained INN for the selected video coding system. This trained INN can be provided to receiver devices to perform the inferring phase using a backward pass, as described in figure 7, in complement to the decoding step that is for example provided by a decoder 400 of figure 4.

**Figure 7** illustrates an example of architecture for using a trained invertible neural network to improve the image decoding according to embodiments. This image improvement uses an INN trained according to the architecture of figure 6 and the corresponding losses, for the selected video coding system. An input image (701) is encoded by an encoder (710) and the encoded data is provided to a decoder (720). The decoder decodes an image (721). A generator (760) determines a randomly generated residual map (761) that follows the distribution used during the training phase (e.g. normal or uniform). The decoded image and the generated residual map are provided to the INN (750) operated in backward manner. The INN determines a decoded image (751) and a residual error map (752). The residual map is combined (i.e. added) to the compressed image, allowing to reconstruct (770) an enhanced image (771). Indeed, the residual error map corrects some of the defects introduced by the video coding system.

In at least one embodiment, the backward pass is performed iteratively in order to perform the improvement several times.

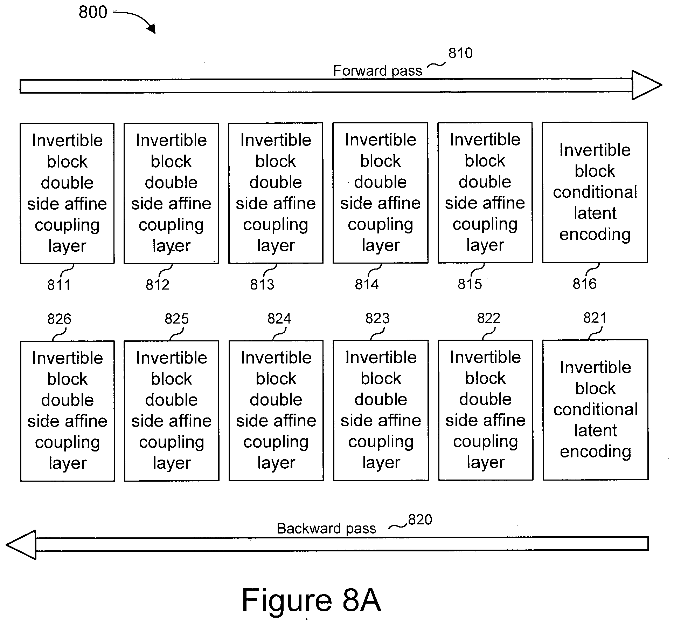

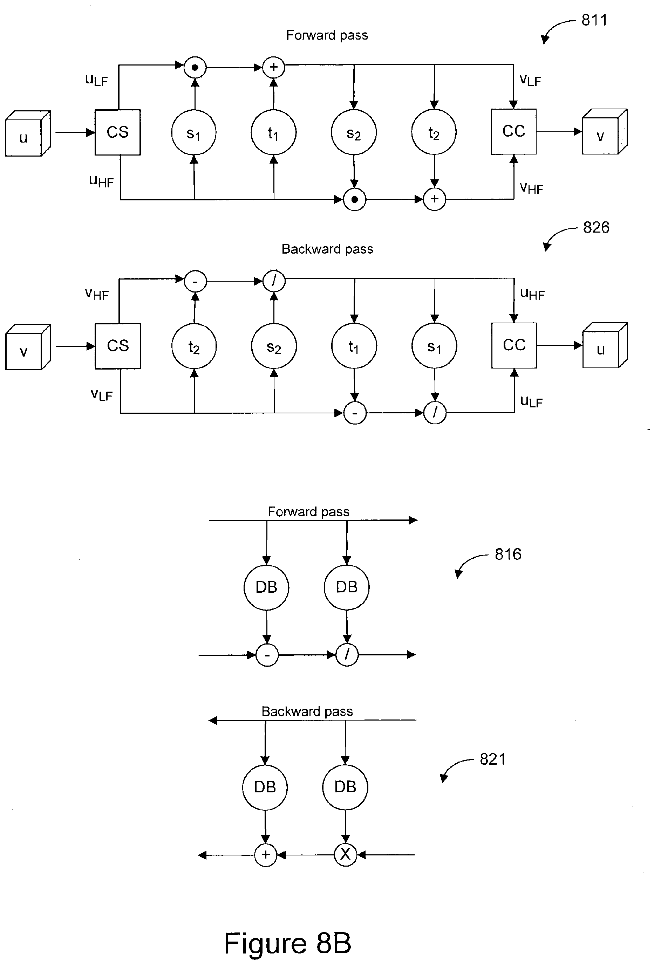

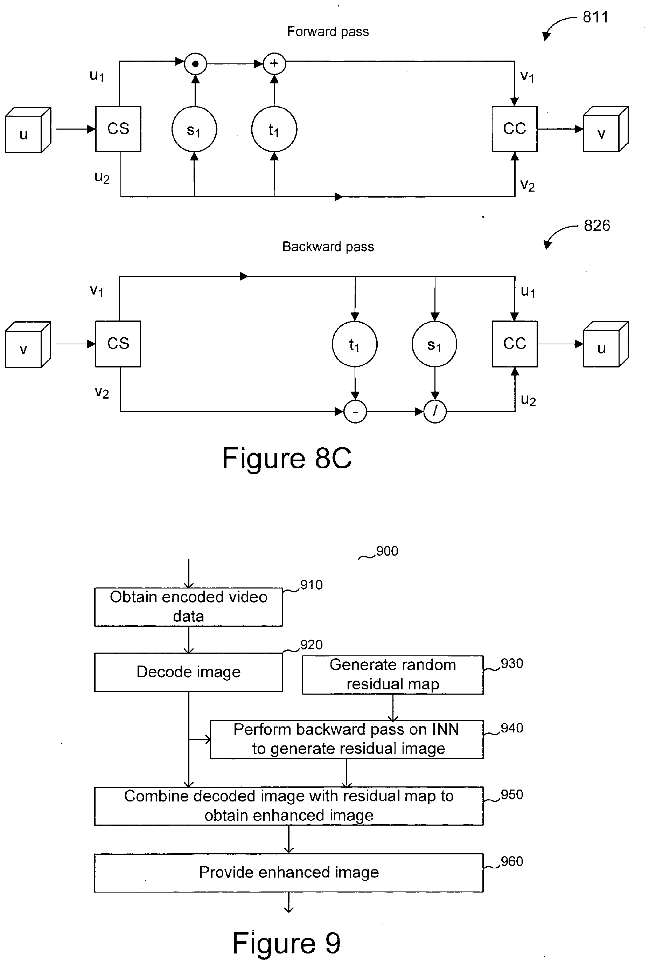

**Figure 8A, 8B, 8C** illustrate example of architectures for the invertible neural network model according to embodiments. Figure 8A presents the overall architecture of the model. The architecture (800) is based on five double side affine coupling layers (811 to 815 for the forward pass 810 and 822 to 826 for the backward pass 820) and one conditional latent encoding layer (816 for the forward pass and 821 for the backward pass). Figure 8B presents details of this architecture. The elements 811 and 826 correspond to a single layer of double side affine coupling of the model.

The channel splitting (CS) consists in getting the upper half of the channel in one part and the other one in the second part. The channel concatenation (CC) is the simple concatenation of the two parts.

In the forward affine coupling (811), the input $u$ is split into two parts $[u_1, u_2]$ and an affine transformation is applied as:

$$v_1 = u_1 \odot \exp\big(s_1(u_2)\big) + t_1(u_2)$$

$$v_2 = u_2 \odot \exp\big(s_2(v_1)\big) + t_2(v_1)$$

where, $\odot$ represents the element-wise multiplication. $t_j$ and $s_j$ are corresponding respectively to the scale and shift (transform) coefficients of an arbitrary network. A five-layer densely connected convolutional block may be used to learn the two coefficients.

In the backward affine coupling (826), the backward path is simply computed as:

$$u_2 = \big(v_2 - t_2(v_1)\big) \oslash \exp\big(s_2(v_1)\big)$$

$$u_1 = \big(v_1 - t_1(u_2)\big) \oslash \exp\big(s_1(u_2)\big)$$

where, $\oslash$ represents the element-wise division. $t_j$ and $s_j$ are the same scale and shift coefficients as used for the forward mapping.

The equations above for the affine couplings are using the conventional notation where *u* is an input and *v* an output. These letters are not related to the chrominance elements of the image.

The elements 811 and 826 correspond to the conditional latent encoding layer. This layer is a one side-side affine coupling layer that normalizes the reconstructed residual $\hat{\varepsilon}_{fwd}$ to a normal distribution conditioned by the prior knowledge of the compressed image $\hat{I}$ as follows, for the forward pass (816):

$$\epsilon_{fwd} = \frac{\left(\hat{\epsilon}_{fwd} - t(\hat{I})\right)}{\exp\left(s(\hat{I})\right)}$$

where *s*, *t* are dense blocks (DB). A dense block consists of densely connected convolutional layers.

The reverse mapping (821), used in the backward, can be expressed as follows, in the example of a normal distribution:

$$\tilde{z} = z \odot \exp\left(s(\hat{I})\right) + t(\hat{I}), where\ z \sim \mathcal{N}(0,1)$$

As in the forward pass, the reverse mapping is conditioned by the compressed image $\hat{I}$. $\tilde{z}$ is the output of the conditional latent encoding block.

Figure 8C presents a variation of the double side affine coupling layers that could be used in replacement of elements 811 and 826 of figure 8B. In the forward pass, the variable $u_2$ represents the compress image, whereas the variable $u_1$ represent the residual error. In the backward pass, the variable $v_1$ represents the compress image, whereas the variable $v_2$ represent the residual error.

**Figure 9** illustrates an example of process for decoding an image using a trained invertible neural network generating a residual error map according to embodiments. This process 900 is for example implemented in a device 1000 and executed by a processor 1010 of figure 1 and is based on the embodiments described above, such as described with respect to figures 6, 7, 8A, 8B and 8C. In step 910, the processor obtains encoded video data. In step 920, the processor decodes an image. In step 930, the processor generates a random residual map that follows a selected distribution (e.g. normal or uniform). In step 940, the processor performs a backward pass on a trained INN based on the decoded image and random residual map. This step allows to determine a reconstructed residual map. In step 950, the processor combines the decoded image with the reconstructed residual map/ In step 960, the processor provides the enhanced image.

Step 920, 930, 940, 950 may be implemented in the post-decoding processing (485) of the decoder 400 of figure 4.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the motion compensation and motion estimation modules of a video encoder 300 and decoder 400 as respectively shown in figures 3 and 4.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "map", "frame", "slice" and "tiles" may be used interchangeably. Usually, but not necessarily, the term "reconstructed" is used at the encoder side while "decoded" is used at the decoder side. The term compressed represents the result of an encoding step followed by a decoding step.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

**Claims**

1. A method comprising:

    - decoding an image from an obtained encoded video data,
    - generating a random map,
    - performing a backward pass on an invertible neural network configured to generate a residual image based on the decoded image and the random map,
    - combining the decoded image and the residual image into an enhanced image, and
    - providing the enhanced image.

2. The method of claim 1, wherein the invertible neural network is configured to determine, in forward pass, a latent variable from a decoded image and a residual coding map and to determine, in backward pass, a reconstructed residual map from a decoded image and a random residual map.

3. The method of any of claims 1 or 2, wherein the invertible neural network is trained to minimize a loss based on a plurality of losses for the forward pass and a plurality of losses for the backward pass.

4. The method of claim 3, wherein one loss for the forward pass forces the latent variable to follow a normal distribution or a uniform distribution.

5. The method of any of claims 3 or 4, wherein one loss for the forward pass forces the latent variable to follow a normal distribution or a uniform distribution.

6. The method of any of claims 1 to 6, wherein the invertible neural network uses a model comprising five double side affine coupling layers and one conditional latent encoding layer.

7. An apparatus comprising:

   - a decoder configured to decode an image from an obtained encoded video data,
   - an invertible neural network configured to generate a residual image based on the decoded image and the random map,
   - one or more processor configured to:

      - generate a random map,
      - perform a backward pass on an invertible neural network to generate a residual image based on the decoded image and the random map,
      - combine the decoded image and the residual image into an enhanced image, and
      - provide the enhanced image.

8. The apparatus of claim 7, wherein the invertible neural network is configured to determine, in forward pass, a latent variable from a decoded image and a residual coding map and to determine, in backward pass, a reconstructed residual map from a decoded image and a random residual map.

9. The apparatus of any of claims 7 or 8, wherein the invertible neural network is trained to minimize a loss based on a plurality of losses for the forward pass and a plurality of losses for the backward pass.

10. The apparatus of claim 9, wherein one loss for the forward pass forces the latent variable to follow a normal distribution or a uniform distribution.

11. The apparatus of any of claims 9 or 10, wherein one loss for the forward pass forces the latent variable to follow a normal distribution or a uniform distribution.

12. The apparatus of any of claims 7 to 11, wherein the invertible neural network uses a model comprising five double side affine coupling layers and one conditional latent encoding layer.

13. A computer program comprising program code instructions for implementing the method according to any of claims 1 to 6 when executed by a processor.

14. A non-transitory computer readable medium storing program code instructions for implementing the method according to any of claims 1 to 6 when executed by a processor.

Figure 1

Figure 2

300 ⟶

Figure 3

**Figure 4**

**Figure 5**

Figure 6

Figure 7

800

Forward pass

| Invertible block double side affine coupling layer | Invertible block double side affine coupling layer | Invertible block double side affine coupling layer | Invertible block double side affine coupling layer | Invertible block double side affine coupling layer | Invertible block conditional latent encoding |
|---|---|---|---|---|---|
| 811 | 812 | 813 | 814 | 815 | 816 |

| 826 | 825 | 824 | 823 | 822 | 821 |
|---|---|---|---|---|---|
| Invertible block double side affine coupling layer | Invertible block double side affine coupling layer | Invertible block double side affine coupling layer | Invertible block double side affine coupling layer | Invertible block double side affine coupling layer | Invertible block conditional latent encoding |

Backward pass ~820

# Figure 8A

Figure 8B

811

Forward pass

826

Backward pass

# Figure 8C

~900

Obtain encoded video data ⟩910

Decode image ⟩920

Generate random residual map ⟩930

Perform backward pass on INN to generate residual image ⟩940

Combine decoded image with residual map to obtain enhanced image ⟩950

Provide enhanced image ⟩960

# Figure 9

Europäisches
Patentamt
European
Patent Office
Office européen
des brevets

# EUROPEAN SEARCH REPORT

**Application Number**

EP 24 31 5165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMEUR ZOUBIDA ET AL: "3R-INN: How to be climate friendly while consuming/delivering videos?", ARXIV, vol. v1, 18 March 2024 (2024-03-18), pages 1-10, XP093194581, 201 Olin Library Cornell University Ithaca, NY 14853 DOI: 10.48550/arxiv.2403.11760 Retrieved from the Internet: URL:https://arxiv.org/pdf/2403.11760> * sections 1, 3, 3.1 - 3.4.1; figure 1 * | 1-14 | INV. H04N19/117 G06N3/045 G06N3/047 G06T9/00 H04N19/85 |
| A | YIN CHENZHONG ET AL: "Raising The Limit of Image Rescaling Using Auxiliary Encoding", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034449023, DOI: 10.1109/ICASSP49357.2023.10094627 [retrieved on 2023-05-05] * the whole document * | 1-14 | |
| | | | TECHNICAL FIELDS SEARCHED (IPC) |
| | | | H04N G06N G06T |
| A | US 2023/245275 A1 (PAN ZHIHONG [US]) 3 August 2023 (2023-08-03) * paragraphs [0035] - [0050] * | 3,9 | |

The present search report has been drawn up for all claims

| Place of search | Date of completion of the search | Examiner |
|---|---|---|
| Munich | 4 October 2024 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5165

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | Publication date | Patent family member(s) | Publication date |
|---|---|---|---|
| US 2023245275 A1 | 03-08-2023 | NONE | |

EPO FORM P0459

For more details about this annex : see Official Journal of the European Patent Office, No. 12/82